# EUROPEAN PATENT APPLICATION

(11) **EP 1 205 250 A1**
(43) Date of publication of application: **15.05.2002**
(21) Application number: 99972564.1
(22) Date of filing: 22.11.1999
(51) Int. Cl.: B04B 7/00, G01N 1/00

(54) **PRECIPITATION TUBE FOR CENTRIFUGAL SEPARATION**

(30) Priority: 26.11.1998 JP 33594998; 12.08.1999 JP 22854499
(71) Applicant: FUJISAWA PHARMACEUTICAL CO., LTD., Osaka-shi Osaka 541-8514 (JP)
(72) Inventor: SAWADA, Naotaka, Otsu-shi, Shiga-ken 520-2264 (JP); BANBA, Akiyoshi, Otsu-shi, Shiga-ken 520-0241 (JP); NISHIMURA, Shintaro, Tsuchiura-shi, Ibaraki-ken 300-0848 (JP)
(74) Representative: Leson, Thomas Johannes Alois, Dipl.-Ing.
(86) International application number: JP9906526
(87) International publication number: WO0030756

(57) **Abstract**

The invention relates to a tool capable of extracting only a lower layer liquid without contamination from a two-phase liquid separated into an upper layer liquid and a lower layer liquid by means of centrifugal force. An internal tube is inserted in and fixed to a vessel body with its top opened. Upper and lower portions of a centrifugal separation chamber formed between inner peripheral surface of the vessel body and outer peripheral surface of the internal tube is communicated to an extraction chamber inside of the internal tube. A piston plug integrally formed with a seal cap for closing top opening of the vessel body is fitted and inserted into the internal tube. Communication between the upper and lower portions of the centrifugal separation chamber and the extraction chamber is interrupted when inserting the piston plug into the innermost area of the internal tube. Upper space of the centrifugal separation chamber and space on the lower end face side of the piston plug are communicated during the process of pulling out the piston plug from the internal tube. Further, the internal tube is inserted into the vessel body with its top opened, lower end opening of the internal tube is closed by a closure plug coming off by a downward pressure force and falling down in any one of forward, rearward, leftward and rightward directions when reaching the inner bottom face of the vessel body, and the centrifugal separation chamber formed between the inner peripheral surface of the vessel body and the outer peripheral surface of the internal tube is sealed by a cap.

## Description

### Technical Field

The present invention relates to a precipitation tube for centrifugal separation (hereinafter referred to as "centrifugal precipitation tube") used in the case when a liquid mixture to be separable into two or more liquid phases is separated due to difference in specific gravity utilizing centrifugal force.

### Background Art

In the case of measuring, for example, a concentration of a medicament contained in a serum, the medicament in the serum is extracted by means of chloroform. In this case, it has been conventional that a buffer solution is applied to the serum, and a liquid mixture with chloroform added further thereto is thoroughly shaken. Subsequently, the liquid mixture is separated without delay into a water phase (upper layer liquid) and a chloroform phase (lower layer liquid) using a centrifugal separator, and only a predetermined volume of the chloroform phase is sampled. Thus, in the case that a liquid mixture separable into two liquid phases using a centrifugal separator, such as a liquid mixture of water and organic solvent, is separated into an upper layer liquid and a lower layer liquid due to difference in specific gravity, a centrifugal precipitation tube has been heretofore used. Such a conventional centrifugal precipitation tube consists of a tubular vessel body with its upper surface opened and a cap for closing the opening on the upper surface of the vessel body in a liquid-tight manner. In order to separate a liquid mixture into an upper layer liquid and a lower layer liquid using this centrifugal precipitation tube, the liquid mixture is injected into the vessel body, the cap is tightly fitted onto the upper surface opening of the vessel body. Then, the centrifugal precipitation tube is subjected to a centrifugal separator, whereby the liquid mixture within the centrifugal precipitation tube is separated into the upper layer liquid and the lower layer liquid due to difference in specific gravity. In order to take out only the lower layer liquid separately from the upper layer liquid and the lower layer liquid separated in the centrifugal precipitation tube by centrifugal force, it has been generally conducted that, using a syringe, the upper layer liquid is entirely sucked through a suction nozzle and taken out of the internal part of the vessel body. Alternatively, in the case of taking out the upper layer liquid manually, it has been generally conducted that, using a hole pipette, a pipette or the like, the upper layer liquid is entirely removed from the internal part of the vessel body while visually acknowledging a boundary (interface) between the upper layer liquid and the lower layer liquid, thereby only the lower layer liquid being left in the vessel body.

In the mentioned known method, however, that the upper layer liquid is entirely sucked through the suction nozzle by means of the syringe and removed out of the internal part of the vessel body, a problem exists in that a liquid flow is generated at the time of sucking the upper layer liquid by the suction nozzle, whereby a part of the upper layer liquid is mixed into the lower layer liquid and it becomes difficult to remove only the upper layer liquid. On the other hand, in the method of manual operation using a hole pipette or the like, a problem exists in that it requires experience and skill for removing only the upper layer liquid from the internal part of the vessel body, because a part of the upper layer liquid is likely to mix with the lower layer liquid depending on kind of liquid when the upper layer liquid has been taken out to the proximity of the boundary between the upper layer liquid and the lower layer liquid.

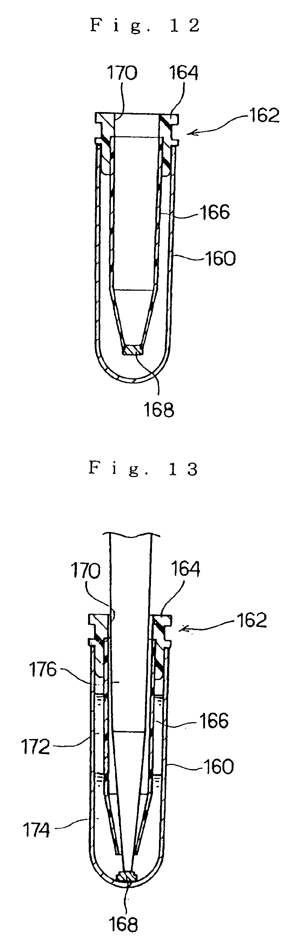

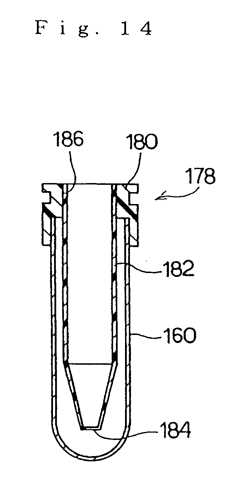

To overcome the foregoing disadvantages, a centrifugal precipitation tube has been proposed as disclosed in Figs. 12 and 14 each showing a longitudinal sectional view of the Japanese Patent Publication (unexamined) No. 285740/1997. This is a centrifugal precipitation tube in which a cap 162 or 178 for closing in a liquid-tight manner an opening on the upper surface of a tubular vessel body provided with a bottom is comprised of a seal plug part 164 or 180, an internal tube 166 or 182, and a closure part 168 or 184. The seal plug part 164 or 180 of the centrifugal precipitation tube is inserted into an upper end portion of the vessel body 160 to tightly fit an outer peripheral surface thereof. A through hole 170 or 186 is formed at the central portion of the seal plug part 164 or 180. The internal tube 166 or 182 includes an outer diameter smaller than an inner diameter of the vessel body 160 and is formed into a tubular shape of which lower portion is tapered. An upper end portion of the internal tube 166 or 182 is fixed to an inner peripheral portion of the through hole 170 or 186 and formed integral with the seal plug part 164 or 180. Further, the internal tube 166 or 182 is formed to have a length such that lower end thereof comes located in the proximity of inner bottom face of the vessel body 160 when fitting the seal plug part 164 or 180 tightly against the upper end portion of the vessel body 160. A closure part 168 of the centrifugal precipitation tube shown in Fig. 12 is comprised of a plug that is upwardly inserted into a lower end opening of the internal tube 166 and closes the lower end opening of the internal tube 166 in a liquid-tight manner. This closure part 168 is formed so as to easily come off or gets out downwardly by means of a downward pressure force, i.e., a downwardly force applied by the lower end of a dispensing nozzle or pipette. Furthermore, a closure part 184 of the centrifugal precipitation tube shown in Fig. 14 is comprised of a thin plate-like part integrally molded at lower end of the internal tube 182. This closure part 184 is easily broken by being downwardly pressed with the lower end of a dispensing nozzle or pipette.

In the centrifugal precipitation tube shown in Figs. 12 and 14, a liquid to be separated by means of a centrifugal force is injected into the vessel body 160 of the centrifugal precipitation tube. Then, the internal tube 166 or 182 of the cap 162 or 178 is deeply put in the vessel body 160, i.e., inserted into the liquid so that the seal plug part 164 or 180 of the cap 162 or 178 tightly fits the upper end portion of the vessel body 160. The centrifugal precipitation tube in this state is subjected to a centrifugal separator. In this manner, the liquid in the centrifugal precipitation tube is separated into an upper layer liquid and a lower layer liquid. At this time, since the internal tube 166 or 182 of the cap 162 or 178 is inserted into the liquid in the vessel body 160 and the lower end of the internal tube 166 or 182 is positioned in the proximity of inner bottom face of the vessel body 160, the lower end of the internal tube 166 or 182 is closed in a liquid-tight manner and positioned below the boundary between the upper layer liquid and the lower layer liquid. Thus, a portion proximate to the lower end of the internal tube 166 or 182 is in the state of being inserted into the lower layer liquid. In order to extract only the lower layer liquid from the centrifugal precipitation tube in such a state, the lower end portion of the dispensing nozzle (or disposable chip forming the lower end portion of the dispensing nozzle) or a pipette is deeply inserted into the internal part of the internal tube 166 or 182 passing a through hole of the seal plug part 164 or 180 of the cap 162 or 178, and the closure part 168 or 184 at the lower end of the internal tube 166 or 182 is downwardly pressed by means of the lower end of the dispensing nozzle or pipette. As a result, the closure part 168 or 184 for closing the lower end of the internal tube 166 or 182 gets off or broken and the lower end of the dispensing nozzle or pipette is inserted into the lower layer liquid. Thereafter, a liquid is sucked into the dispensing nozzle by driving the syringe. Alternatively, when manually operating the pipette and sucking the liquid into the pipette, only the lower layer liquid is sucked into the dispensing nozzle or pipette since the lower end of the dispensing nozzle or pipette is inserted into the lower layer liquid.

In the centrifugal precipitation tube shown in Figs. 12 and 14, however, after the separation of liquid into the upper layer liquid and the lower layer liquid, the closure part 168 or 184 at the lower end of the internal tube 166 or 182 is downwardly pressed by means of the lower end of a dispensing nozzle or pipette, and the closure part 168 or 184 for closing the lower end of the internal tube 166 or 182 comes off or broken. At this time, it is to be noted that the lower layer liquid is flushed into the internal tube 166 or 182, whereby a boundary between an upper layer liquid and a lower layer liquid is disturbed. Thus, a part of the upper layer liquid is mixed into the lower layer liquid side, and the upper layer liquid together with the lower layer liquid is flushed into the internal tube 166 or 182. As a result, there is a likelihood that the lower layer liquid being mixed with a part of the upper layer liquid is sucked into a dispensing nozzle or pipette, and a contamination is produced in the lower layer liquid.

Further, in the centrifugal precipitation tube shown in Fig. 12, as described with reference to Fig. 13, after the separation of a liquid into the upper layer liquid 172 and the lower layer liquid 174, the closure part 168 at the lower end of the internal tube 166 is pressed downward by the lower end of the dispensing nozzle 176, and the closure part 168 closing the lower end of the internal tube 166 is caused to come off. At this time, the closure part 168 sinks vertically right under the lower end of the internal tube 166 and left on the inner bottom face of the vessel body 160 in the same posture since the lower surface of the closure plug 168 is flat. Therefore, when inserting the dispensing nozzle 176 deeply to the extent that the lower end thereof comes in the proximity of the inner bottom face of the vessel body 160, the lower end face of the dispensing nozzle 176 comes in close contact with the upper surface of the closure plug 168, and the lower end opening of the dispensing nozzle 176 is entirely closed by the closure plug 168. As a result, a liquid will not be sucked into the dispensing nozzle 176. Particularly in the case of automating the operation of sucking the liquid into the dispensing nozzle 176 by driving up-and-down the dispensing nozzle 176, this becomes a serious problem.

Furthermore, before the centrifugal precipitation tube is subjected to the centrifugal separator, when the internal tube 166 is deeply put in the vessel body 160 and inserted into the liquid after injection of the liquid into the vessel body 160, the liquid flows in such a manner as being pressed away by means of the lower surface of the closure part 168 plugged in the lower end opening of the internal tube 166. In this case, supposing that the lower surface of the closure part 168 is flat as shown in Fig. 12, when the lower end portion of the internal tube 166 is passed through the boundary between, for example, a water phase and a chloroform phase (this mixed solution is separated into two phases to a certain degree due to difference in specific gravity even before the centrifugal separation), the lower surface of the closure part 168 comes in contact with impurities located at the boundary, and therefore the liquid is subjected to the centrifugal separation with impurities being stuck to the lower surface of the closure part 168. Then, the lower layer liquid 174 having been separated by means of centrifugal separation comes in contact with the lower surface of the closure part 168. As a result, the impurities stuck to the lower surface of the closure part 168 come to be dispersed into the lower layer liquid to be extracted and analyzed. Thus, negative affects are given upon device analysis.

### Disclosure of Invention

The present invention was made in view of the above-discussed problems. A first object of the invention is to provide a centrifugal precipitation tube capable of extracting exactly only a lower layer liquid without any contamination from two-phase liquid (or more numbers of phase liquid) separated into an upper layer liquid and a lower layer liquid by means of centrifugal force. A second object of the invention is to provide a centrifugal precipitation tube capable of exactly sucking a lower layer liquid into a dispensing nozzle or pipette constantly at all times, and preventing a lower surface of a closure part of an internal tube from sticking of impurities in the process of inserting the internal tube into liquid by deeply placing it in a vessel body after injection of liquid into the vessel body.

To accomplish the foregoing first object, a centrifugal precipitation tube according to a first invention comprises: a tubular vessel body of which top end is opened while bottom end thereof being closed; and seal means for closing releasably the open top end of the vessel body in a liquid-tight manner;
the centrifugal precipitation tube being characterized in that: an internal tube, diameter of which is smaller than that of the mentioned vessel body, is inserted in an internal part of the vessel body and secured thereto, whereby a centrifugal separation chamber is formed between inner peripheral surface of the vessel body and outer peripheral surface of the internal tube, and an upper portion and a lower portion of the centrifugal separation chamber are respectively communicated to an extraction chamber inside of the mentioned internal tube; a piston plug, lower end portion of which is inserted in the proximity of an inner bottom face of the mentioned vessel body, is slidably and removably inserted into the mentioned internal tube in axial direction thereof; communications between the upper and lower portions of the mentioned centrifugal separation chamber and the mentioned extraction chamber are respectively interrupted when inserting the mentioned piston plug into the innermost area of the mentioned internal tube; and an upper space of the mentioned centrifugal separation chamber and a space on the lower end face side of the piston plug in the mentioned extraction chamber are communicated to each other during the process of pulling out the mentioned piston plug from the state of being inserted in the innermost area of the mentioned internal tube.

In the centrifugal precipitation tube of above construction according to the first invention, a liquid to be separated by means of centrifugal force is injected into the vessel body of the centrifugal precipitation tube, then the piston plug is inserted into the innermost area of the internal tube, top opening of the vessel body is closed in a liquid-tight manner by the seal means, and the centrifugal precipitation tube in this state is subjected to a centrifugal separator. At this time, the lower end portion of the piston plug is inserted in the proximity of inner bottom face of the vessel body, whereby the liquid remaining in the extraction chamber inside of the internal tube is entirely extruded therefrom to the lower part of the centrifugal separation chamber between the inner peripheral surface of the vessel body and the outer peripheral surface of the internal tube. Further, since the communication between the upper and lower portions of the centrifugal separation chamber and the extraction chamber is interrupted during the centrifugal separation, any liquid does not flow from the centrifugal separation chamber into the extraction chamber. Then, the liquid in the centrifugal precipitation tube is separated into an upper layer liquid and a lower layer liquid in the centrifugal separation chamber due to difference in specific gravity. At that time, by appropriately setting position of the lower end of the internal tube, the lower end of the internal tube is positioned below the boundary between the upper layer liquid and the lower layer liquid, and the lower end of the internal tube is in the state of being immersed in the lower layer liquid.

In order to extract only the lower layer liquid from a centrifugal precipitation tube after the liquid is separated into upper layer liquid and lower layer liquid in the precipitation tube by means of the centrifugal separator, top opening of the vessel body that_has been closed by the seal means is opened and the piston plug is slowly pulled out from the internal tube. As a result, the lower layer liquid in the centrifugal separation chamber is slowly sucked into the extraction chamber inside of the internal tube. In this regard, supposing that the liquid from the centrifugal separation chamber to the extraction chamber be continuously sucked, not only the lower layer liquid but also the upper layer liquid will flow into the extraction chamber, and a part of the upper layer liquid will be mixed into the lower layer liquid in the extraction chamber, whereby contamination will take place in the lower layer liquid. In this centrifugal precipitation tube, however, the upper space of the centrifugal separation chamber and the space on the side of the lower end face of the piston plug are communicated during the process of pulling out the piston plug. Accordingly, an equal air pressure is applied onto the liquid surface of lower layer liquid in the extraction chamber and the liquid surface of upper layer liquid in the centrifugal separation chamber, respectively. Therefore, even if the piston plug would be further pulled out, it is prevented that the lower layer liquid in the extraction chamber is sucked upward by means of the piston plug.

As described above, in the precipitation tube of above construction, since the lower layer liquid in the centrifugal separation chamber is slowly sucked into the extraction chamber inside of the internal tube by means of the piston plug, it does not occur that the boundary between the upper layer liquid and the lower layer liquid in the centrifugal separation chamber is disturbed, thereby a part of the upper layer liquid being mixed into the side of the lower layer liquid, and the upper layer liquid together with lower layer liquid flow into the extraction chamber inside of the internal tube. Further, by appropriately setting a pull-up position of the piston plug at the time of communicating the upper space of the centrifugal separation chamber to space on the side of lower end face of the piston, it does not occur, either, that the lower layer liquid as well as the upper layer liquid flow into the extraction chamber, and a part of the upper layer liquid is mixed into the lower layer liquid. Consequently, only the lower layer liquid will remain or be accumulated in the extraction chamber when the piston plug is completely pulled out from the internal tube. The lower layer liquid remaining in the extraction chamber is sucked into a dispensing nozzle by driving a syringe or the like after deeply placing, e.g., lower end portion of the dispensing nozzle (pipette or the like in the case of manual operation. Utilization of the dispensing nozzle is hereinafter described) in the internal tube, thereby inserting the lower end of the dispensing nozzle into the lower layer liquid. At this time, by appropriately setting the position of the lower end of the internal tube, the lower end of the internal tube becomes in the state of being positioned below the boundary between the upper layer liquid and the lower layer liquid, even after a predetermined volume of lower layer liquid has been sucked into the dispensing injection nozzle.

In this manner, as a result of using a centrifugal precipitation tube according to the first invention, only the lower layer liquid can be reliably extracted, without any occurrence of contamination involving the upper layer liquid, from two or more liquid phases separated into the upper layer liquid and lower layer liquid by means of the centrifugal force.

In the centrifugal precipitation tube according to the first invention, it is preferable that the seal means and the piston plug are communicated to each other.

In the centrifugal precipitation tube of such construction, since the seal means and the piston plug are integrated with each other, the piston plug is deeply inserted into the innermost area of the internal tube when the top opening of the vessel body is closed in a liquid-tight manner by the seal means. And the piston plug is pulled out from the state of being inserted into the innermost area of the internal tube when pulling up the seal means after the top opening of the vessel body having been closed by the seal means is opened. As a result, operation of the centrifugal precipitation tube can be simply conducted.

Further, in the centrifugal precipitation tube according to the first invention, it is preferable that a seal member, coming in close contact with the inner peripheral surface of the internal tube in a liquid-tight manner when the piston plug is inserted and fitted into the internal tube, is mounted on and secured to the external peripheral surface of the mentioned piston plug.

In the centrifugal precipitation tube of such construction, when inserting the piston plug into the innermost area of the internal tube, the seal member inserted and secured on the external peripheral surface of the piston plug comes in close contact with the inner peripheral surface of the internal tube in a liquid-tight manner, thereby a communication between the upper portion of the centrifugal separation chamber and the extraction chamber is interrupted without fail.

Further, in the centrifugal precipitation tube according to the first invention, it is preferable that the upper end face of the internal tube is opened in the internal part of the vessel body so that upper portion of the centrifugal separation chamber and the extraction chamber inside of the internal tube are communicated to each other, and a slot is formed in the internal part of the piston plug in such a manner as to be opened at a lower end face and at an external peripheral surface of the piston plug.

In the centrifugal precipitation tube of such construction, the opening in the external peripheral surface of the piston plug of the slot formed in the internal part of the piston plug passes over the upper end of the internal tube during the process in which the mentioned piston plug is pulled out from the state of being inserted in the innermost area of the mentioned internal tube, whereby the upper portion of the centrifugal separation chamber and space on the side of lower end face of the piston plug in the extraction chamber are communicated to each other without fail through the slot of the piston plug.

Further, in the centrifugal precipitation tube according to the first invention, it is preferable that the internal tube is provided with a communication aperture so that upper portion of the centrifugal separation chamber and the extraction chamber inside of the internal tube are communicated to each other through the communication aperture, a slot opened at the lower end face and external peripheral surface of the piston plug is formed in the internal part of the piston plug, and a groove or a concave-surface part communicating to the mentioned slot is formed on the external peripheral surface of the piston plug.

In the centrifugal precipitation tube of such construction, during the process in which the mentioned piston plug is pulled out from the state of being inserted in the innermost area of the mentioned internal tube, the upper end portion of the groove or the concave-surface part provided on the external peripheral surface of the piston plug passed over the communication aperture opened in the internal tube, whereby upper portion of the centrifugal separation chamber and space on the side of lower end face of the piston plug are communicated to each other without fail through the communication aperture in the internal tube, through a clearance between the groove or concave-surface part on the external peripheral surface of the piston plug and inner peripheral surface of the internal tube and through the slot in the piston plug.

Further, in the centrifugal precipitation tube according to the first invention, it is preferable that the internal tube is formed so that inner diameter of upper side portion thereof is larger than that of the lower end portion.

In the centrifugal precipitation tube of such construction, the communication of each of lower and upper portions of the centrifugal separation chamber between the inner peripheral surface of the vessel body and outer peripheral surface of the internal tube to the extraction chamber inside of the internal tube is interrupted when inserting the piston plug into the innermost area of the internal tube. Whereas during the process in which the mentioned piston plug is pulled out from the state of being inserted in the innermost area of the mentioned internal tube, a clearance is formed between the external peripheral surface of the lower end portion of the piston plug and inner peripheral surface of the internal tube with its inner diameter enlarged, whereby upper space of the centrifugal separation chamber and space on the side of the lower end face of the piston plug in the extraction chamber becomes communicated to each other without fail through the mentioned clearance.

To accomplish the foregoing first and second objects, a centrifugal precipitation tube according to a second invention comprises: a tubular vessel body of which top end is opened while bottom end thereof being closed; an internal tube being tubular shaped and having an outer diameter smaller than inner diameter of the mentioned vessel body, and which is inserted into the internal part of the vessel body and held so that lower end of the internal tube is positioned in the proximity of the inner bottom face of the vessel body; a closure plug which is detachably fitted to lower end portion of the mentioned internal tube, closes lower end opening of the internal tube in a liquid-tight manner, and easily comes off from the lower end portion of the internal tube by downward pressure force; and seal means for sealing a centrifugal separation chamber formed between inner peripheral surface of the mentioned vessel body and outer peripheral surface of the mentioned internal tube;
the centrifugal precipitation tube being characterized in that: the lower surface side of the mentioned closure plug is formed into such a configuration that the closure plug comes off from the lower end portion of the mentioned internal tube and falls down in any one of forward, reward, leftward and rightward directions from the coming off position upon reaching the inner bottom face of the mentioned vessel body.

In the centrifugal precipitation tube of above construction according to the second invention, a liquid to be separated by means of centrifugal force is inserted into the vessel body, then the internal tube is deeply put in the vessel body and inserted into the liquid, and a centrifugal separation chamber formed between the inner peripheral surface of the vessel body and outer peripheral surface of the internal tube is sealed by the seal means. The centrifugal precipitation tube in this state is subjected to a centrifugal separator. By means of a centrifugal separator, the liquid in the centrifugal precipitation tube is separated into an upper layer liquid and a lower layer liquid due to difference in specific gravity. At that time, since the internal tube is inserted into the liquid in the vessel body and lower end of the internal tube is positioned in the proximity of inner bottom face of the vessel body, the lower end of the internal tube being closed in a liquid-tight manner is positioned below a boundary between the upper layer liquid and lower layer liquid. And the portion proximate to the lower end of the internal tube is in the state of being inserted into the lower layer liquid. In order to extract only the lower layer liquid from the centrifugal precipitation tube in such a state, lower end portion of a dispensing nozzle is deeply put in the internal tube inwardly, and a closure plug at the lower end of the internal tube is downwardly pressed by lower end of the dispensing nozzle. Therefore, the closure plug having closed the lower end of the internal tube comes off and the lower end of the dispensing nozzle is inserted into the lower layer liquid. The closure plug having come off from the lower end of the internal tube sinks right downwardly below the lower end opening of the internal tube. Then, the closure plug having reached to the inner bottom face of the vessel body falls down in any one of forward, rearward, leftward and rightward directions from the coming off position. Consequently, even if lower end of the dispensing nozzle is put in the proximity of inner bottom face of the vessel body, it does not occur that the lower end of the dispensing nozzle comes in close contact with the closure plug and the lower end opening of the dispensing nozzle is entirely closed by means of the closure plug. As a result, the lower layer liquid is sucked without fail into the dispensing nozzle.

In this manner, when using the centrifugal precipitation tube according to the second invention, the lower layer liquid can be constantly sucked into the dispensing nozzle or pipette at all times from two or more liquid phases separated into the upper layer liquid and the lower layer liquid. Accordingly, only the lower layer liquid can be exactly extracted without any contamination with the upper layer liquid. Further, operation fault can be prevented particularly in the case of automating the sucking operation of liquid into the dispensing nozzle by driving up and down the separating injection nozzle.

In the centrifugal precipitation tube according to the second invention, it is preferable that lower surface side of the mentioned closure plug is formed into a conical or pyramidal shape.

In the centrifugal precipitation tube of such construction, the closure plug disengaged from lower end portion of the internal tube and reached to the inner bottom face of the vessel body is formed so that the lower surface side of the closure plug is a conic shape. Accordingly, the closure plug falls down without fail in any one of forward, rearward, leftward and rightward directions. Consequently, even if lower end of the dispensing nozzle is put in the proximity of inner bottom face of the vessel body, it does not occur that the lower end of the dispensing nozzle comes in close contact with the closure plug and the lower end opening of the dispensing nozzle is entirely closed by means of the closure plug.

Further, when injecting a liquid into the vessel body and placing the internal tube deeply in the vessel body to insert it into the liquid, the liquid flows so as to be pushed away by means of the lower surface side of the closure plug inserted in the lower end opening of the internal tube. However, since the lower surface side of the closure plug is formed into a conic shape, even if the lower surface side of the closure plug comes in contact with the impurities when lower end portion of the internal tube passes over the boundary between, for example, a water phase and a chloroform phase, impurities flow upwardly along the conic-shaped lower surface side of the closure plug together with the liquid and do not stick to the lower surface side of the closure plug. As a result, it is prevented that impurities stuck to the lower surface side of the closure plug is dispersed into the lower layer liquid separated due to centrifugal force, and reliability in results of analysis of equipment can be improved.

Further, in the centrifugal precipitation tube of above construction, it is preferable that a flange that comes in close contact with the upper edge portion of said vessel body either by interposition of a liquid-tight seal member or by direct engagement is formed on an upper end portion of said internal tube; a thread part is formed on an outer peripheral surface of the upper end portion of the mentioned vessel body; and seal means is formed by a cap having a thread part to be mounted on the upper end portion of the mentioned vessel body and screw threaded into the mentioned thread part, and which is provided with a through hole at the central portion of an upper surface; in which, by screw threading the cap into the upper end portion of the vessel body, a centrifugal separation chamber formed between inner peripheral surface of the vessel body and outer peripheral surface of the mentioned internal tube is sealed in an air-tight manner, while, by loosing the cap, the centrifugal separation chamber is communicated to outside air.

In the centrifugal precipitation tube of such construction, to conduct a centrifugal separation of a liquid by means of a centrifugal separator, the liquid is injected into the vessel body in the state of pulled out the internal tube from the vessel body, then the internal tube is inserted into the internal part of the vessel body, and subsequently the cap is mounted on the upper end portion of the vessel body and screw-threaded thereinto. Thus, the flange part of the upper end portion of the internal tube is pressed onto the upper edge of the vessel body either through the liquid-tight seal member or directly by means of the peripheral edge portion of the through hole on the upper surface of the cap. Accordingly, the flange part of the internal tube and the upper edge of the vessel body comes in close contact with each other. Thus, the centrifugal separation chamber between the inner peripheral surface of the vessel body and the outer peripheral surface of the internal tube comes to be sealed in an air-tight manner and in a liquid-tight manner. Further, when the lower layer liquid is extracted from the internal part of the centrifugal precipitation tube after conducting the centrifugal separation, the cap mounted on the upper end portion of the vessel body is loosened. Consequently, the sealed state between the flange of the internal tube and the top edge of the vessel body is released, and the centrifugal separation chamber communicates to the outside air through a clearance between the inner peripheral surface of the upper portion of the vessel body and the outer peripheral surface of the upper portion of the internal tube as well as through a clearance between the flange part of the internal tube and the top edge of the vessel body. As a result, there is no more such trouble that, when the closure plug at the lower end portion of the internal tube is subsequently pressed downward by the lower end of the dispensing nozzle for coming off, the lower layer liquid is flushed into the internal tube due to a gas pressure from gaseous phase portion, thereby disturbing boundary between the upper layer liquid and the lower layer liquid, a part of the upper layer liquid being mixed into the lower layer liquid side, and the upper layer liquid together with the lower layer liquid flow into the internal tube. Thus, only the lower layer liquid can be exactly extracted without contamination with the upper layer liquid.

### Brief Description of Drawings

Fig. 1 shows a preferred embodiment of the first invention and is a front view in which a centrifugal precipitation tube is separated into a vessel body and a cap section and the vessel body is in the sate of being partly broken.
Fig. 2 is a longitudinal sectional view of the centrifugal precipitation tube in Fig. 1 showing the state that the cap section is mounted on the vessel body.
Fig. 3 is a sectional view taken in the direction of the arrows along the line III-III in Fig.2.
Fig. 4 is a partially longitudinal sectional view for explaining the operation in each process in which centrifugal separation of a liquid is conducted, and only a lower layer liquid is extracted using the centrifugal precipitation tube shown in Fig.1.
Fig. 5 is a longitudinal sectional view for explaining a final process of the operation in which centrifugal separation of the liquid is conducted using the centrifugal precipitation tube shown in Fig.1 and thereafter only the lower layer liquid is extracted.
Fig. 6 shows another embodiment of the first invention and is a longitudinal sectional view of a centrifugal precipitation tube showing the state that a cap section is mounted on a vessel body.
Fig. 7 shows a further embodiment of the first invention and is a longitudinal sectional view of a centrifugal precipitation tube showing the state that a cap section is mounted on a vessel body.
Fig. 8 shows a modification of an embodiment of the first invention and is a partially longitudinal sectional view of a centrifugal precipitation tube showing the state that a piston plug of a cap section is fitted and inserted into an internal tube of a vessel body.
Fig. 9 shows an embodiment of a second invention and is a longitudinal sectional view of a centrifugal precipitation tube.
Fig. 10 is a perspective view showing the state that the centrifugal precipitation tube shown in Fig. 9 is exploded into each component.
Fig. 11 is a partial longitudinal sectional view for explaining an operation wherein a liquid mixture is separated into an upper layer liquid and a lower layer liquid and only the lower layer liquid is extracted using the centrifugal precipitation tube shown in Figs. 9 and 10.
Fig. 12 is a longitudinal sectional view showing an example of construction of a conventional centrifugal precipitation tube in the state that a cap section is mounted on a vessel body.
Fig. 13 is a longitudinal sectional view for explaining a problem in extracting a lower layer liquid using the conventional centrifugal precipitation tube shown in Fig. 12.
Fig. 14 is a longitudinal sectional view showing an example of another construction of a conventional centrifugal precipitation tube in the state that a cap section is mounted on a vessel body.

### Best Mode for carrying Out the Invention

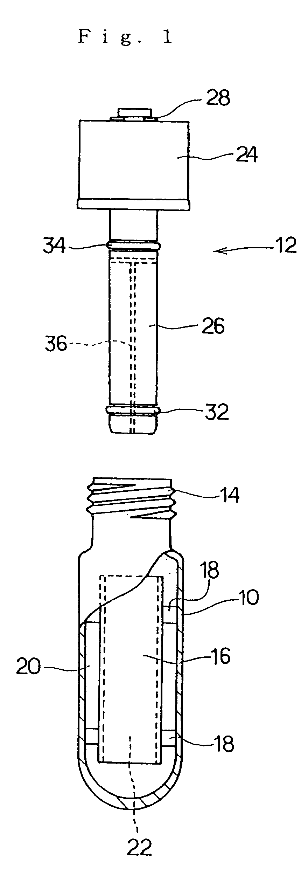

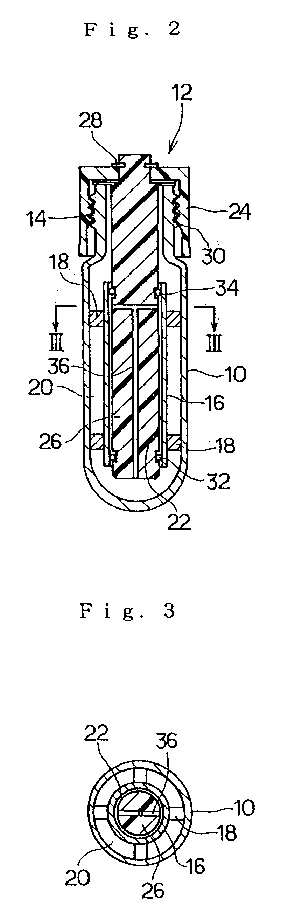

Figs. 1 through 3 respectively show an embodiment of the first invention. Fig. 1 is a front view showing a centrifugal precipitation tube in the state of being separated into a vessel body and a cap section with the vessel body partly broken, Fig. 2 is a longitudinal sectional view showing the state that the cap section is mounted on the vessel body, and Fig. 3 is a sectional view taken in the direction of the arrows along the line III-III in Fig. 2.

This centrifugal precipitation tube consists of a tubular vessel body 10 with its upper surface opened and a cap section 12 for closing the opening on the upper surface of the vessel body 10 in a liquid-tight manner. A thread part 14 is formed on an outer peripheral surface of the upper end portion of the vessel body 10. An internal tube 16, diameter of which is smaller than that of the vessel body 10, is inserted into the internal part of the vessel body 10 so as to be coaxial, and the internal tube 16 is fixed onto the inner wall surface of the vessel body 10 through upper and lower bridges 18. The internal tube 16 is of a cylindrical configuration with its upper and lower ends opened. The upper end face of the internal tube 16 is opened in the internal part of the vessel body 10 so as to be opposite to the top opening surface of the vessel body 10, and the lower end face of the internal tube 16 is opened in the inner bottom portion of the vessel body 10 so as to be opposite to the inner bottom face of the vessel body. Further, a centrifugal separation chamber 20 is formed between the inner peripheral surface of the vessel body 10 and the outer peripheral surface of the internal tube 16, and the inside of the internal tube 16 serves as an extraction chamber 22. An upper portion and a lower portion of the centrifugal chamber 20 are spatially communicated to an upper opening surface and a lower opening surface of the internal tube 16 respectively. The vessel body 10 and the internal tube 16 are made of a material such as glass, and in particular the vessel body 10 is composed of a thick glass so as to be able to resistant to centrifugal load.

The cap section 12 consists of a seal cap 24 and a rod-shaped piston plug 26, and a clamp 28 integrally connects them. Formed on the inside surface of the seal cap 24 is a thread part 30 for screw threading into the thread part 14 at the upper end portion of the vessel body 10. By putting on and threading the seal cap 24 into the upper end portion of the vessel body 10, it is possible to close the top opening of the vessel body 10 in a liquid-tight manner. The piston plug 26 is formed so that outer diameter thereof is slightly smaller than inner diameter of the internal tube 16, whereby the piston plug 26 may be fitted and inserted in the internal tube 16 of the vessel body 10 as well as pulled out from the internal tube 16. As shown in Fig.2, the piston plug 26 is formed to have a length allowing the lower end portion thereof to be inserted in the proximity of the inner bottom face of the vessel body 10 and to be slightly protruded from the lower end of the internal tube 16 when screw threading the seal cap 24 into the upper end portion of the vessel body 10 and inserting the piston plug 26 into the innermost area of the internal tube 16. The piston plug 26 is made of a material such as a fluorine resin.

Seal members, for example O rings 32, 34 are respectively inserted in and fitted on the proximity of the lower end and on the upper portion of the external peripheral surface of the piston plug 26. When inserting and fitting the piston plug 26 in the internal tube 16, each of the O rings 32, 34 comes in close contact with the inner peripheral surface of the internal tube 16 in a liquid-tight manner. Furthermore, the piston plug 26 comes in slidable contact with the inner peripheral surface of the internal tube 16 so as to be slidable in axial direction. As shown in Fig.2, the O rings 32, 34 are inserted and fitted in the axial direction is at positions where the O rings 32, 34 are respectively stopped in the proximity of the upper and lower end when screw threading the seal cap 24 into the upper end portion of the vessel body 10 and inserting the piston plug 26 into the innermost area of the internal tube 16. Therefore, in the state that the piston plug 26 is inserted into the innermost area of the internal tube 16, spatial communication between the lower and upper portions of the centrifugal separation chamber 20 and the extraction chamber 22 inside of the internal tube 16 are completely interrupted by means of the O rings 32, 34, respectively. In addition, instead of inserting and fitting the O rings 32, 34 on the external peripheral surface of the piston plug 26, it is also preferable that the O rings 32, 34 are respectively inserted in and fixed to the proximity of upper and lower ends of the inner peripheral surface of the internal tube 16.

Further, a slot 36 is formed in the internal part of the piston plug 26. This slot 36 is opened at lower end face and at plural points on the external peripheral surface of the piston plug 26. The slot 36 is opened at a position on the external peripheral surface of the piston plug 26, and the opening position is proximate to and slightly below the position where the O ring 34 is inserted and fitted on the external peripheral surface of the piston plug 26.

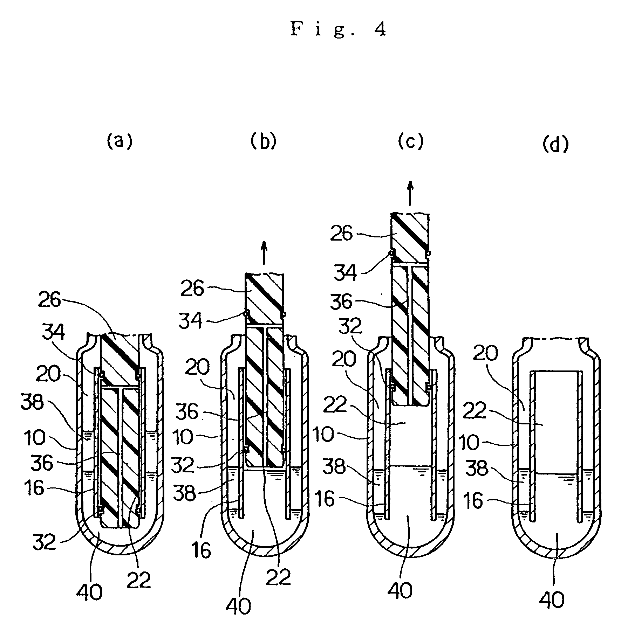

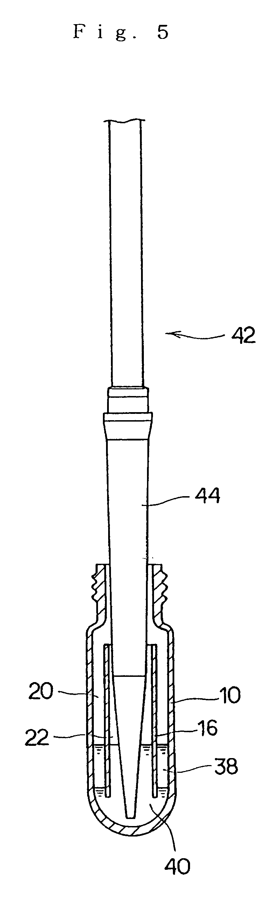

Referring now to Figs. 4 (a), (b), (c), (d) and 5, operation of conducting centrifugal separation of a liquid and extracting only a lower layer liquid using the centrifugal precipitation tube constructed as described above will be hereinafter described.

First, in the state that the cap section 12 is removed from the vessel body 10, a liquid to be separated by means of centrifugal force is injected into the vessel body 10. Taking as an example the case that a medicament contained in a serum is extracted using chloroform, for example, a serum of 0.5cc, a buffer solution of 0.5cc and chloroform of 3.5cc are injected into the vessel body 10 in order. Next, as shown in Fig.2, the piston plug 26 is fitted and inserted into the internal tube 16 and the seal cap 24 is mounted on the upper end portion of the vessel body 10. Then, the seal cap 24 is screw threaded into the upper end portion of the vessel body 10 and the piston plug 26 is inserted into the innermost area of the internal tube 16, resulting in a state that the lower end portion of the piston plug 26 is inserted in the proximity of inner bottom face of the vessel body 10 and slightly protruded from the lower end of the internal tube 16. Therefore, internal part of the vessel body 10 is closed in a liquid-tight manner and a liquid (chloroform) contained in the extraction chamber 22 inside of the internal tube 16 is entirely pressed out from the lower portion of the extraction chamber 22 to the lower portion of the centrifugal separation chamber 20 between the inner peripheral surface of the vessel body 10 and the outer peripheral surface of the internal tube 16 by means of the piston plug 26. The centrifugal precipitation tube in this state is subjected to a shaking device and then to a centrifugal separator. At this time, spatial communication between the lower and upper portions of the centrifugal separation chamber 20 and the extraction chamber 22 inside of the internal tube 16 is completely interrupted by each of the O rings 32, 34, and the liquid may not flow from the centrifugal separation chamber 20 into the extraction chamber 22. Therefore, as showing in the partially longitudinal sectional view of Fig. 4 (a), the liquid contained in the centrifugal precipitation tube is separated into an upper layer liquid (water layer) 38 and a lower layer liquid (chloroform) 40 in the centrifugal separation chamber 20 due to difference in specific gravity. At this time, note that injection amount of the mentioned liquid is adjusted so that lower end of the internal tube 16 is positioned below a boundary between the upper layer liquid 38 and the lower layer liquid 40 and lower end portion of the internal tube 16 is immersed in the lower layer liquid 40.

After completing the centrifugal separation operation, the centrifugal precipitation tube is taken out of the centrifugal separator and the seal cap 24 of the cap section 12 is loosened and removed from the upper end portion of the vessel body 10. Then, as shown in Fig. 4 (b) , the piston plug 26 is slowly pulled out from the internal tube 16. Accordingly, the lower layer liquid 40 in the centrifugal separation chamber 20 is slowly sucked into the extraction chamber 22 inside of the internal tube 16. Thus, since the lower layer liquid 40 in the centrifugal separation chamber 20 is sucked slowly into the extraction chamber 22 by means of the piston plug 26, it does not take place, in the process of sucking the lower layer liquid 40 into the extraction chamber 22, that the boundary between the upper layer liquid 38 and the lower layer liquid 40 in the centrifugal separation chamber 20 is disturbed and a part of the upper layer liquid 38 is mixed into the lower layer liquid 40 side and flows into the extraction chamber 22 together with the lower layer liquid 40.

Subsequently when the O ring 34 inserted in and secured onto the external peripheral surface of the piston plug 26 gets out from the upper edge of the internal tube 16 on the way of pulled out the piston plug 26 and the opening on the external peripheral surface of the piston plug 26 of the slot 36 provided in the internal part of the piston plug 26 passes over the upper end of the internal tube 16, the upper space of the centrifugal separation chamber 20 and the space on the side of lower end face of the piston plug 26 are communicated to each other through the slot 36 of the piston plug 26. As a result, the same air pressure is applied to the liquid surface of the lower layer liquid 40 in the extraction chamber 22 and to that of the upper layer liquid 38 in the centrifugal separation chamber 20 respectively. Accordingly, even though the piston plug 26 is pulled out further as shown in Fig. 4 (c), the lower layer liquid 40 in the extraction chamber 22 is prevented from being sucked up by the piston plug 26. Therefore, it does not take place that not only lower layer liquid 40 but also upper layer liquid 38 flows into the extraction chamber 22 and a part of the upper layer liquid 38 is mixed into the lower layer liquid 40 in the extraction chamber 22.

When the piston plug 26 has been completely pulled out from the internal tube 16, as shown in Fig. 4 (d), liquid surface of the upper layer liquid 38 in the centrifugal separation chamber 20 becomes generally coincident with that of the lower layer liquid 40 in the extraction chamber 22. More exactly, the liquid surface of the lower layer liquid (chloroform) 40 in the extraction chamber 22 becomes slightly below the liquid surface of the upper layer liquid (water layer) 38 due to difference in specific gravity. At this time, injection amount of the mentioned chloroform has been adjusted so that only the lower layer liquid 40 may remain in the extraction chamber 22. In order that lower layer liquid 40 remaining in the extraction chamber 22 may be extracted by means of an automatic dispensing apparatus (not shown), a centrifugal precipitation tube is fixed, a dispensing nozzle 42 is lowered by means of a nozzle drive mechanism (not shown), and the lower end portion of a disposable chip (throw-away chip) 44 forming the lower end portion of the dispensing nozzle 42 is deeply inserted into the innermost area of the internal tube 16 through the top opening of the vessel body 10. Then, after inserting the lower end of the disposable chip 44 into the lower layer liquid 40, the lower layer liquid 40 is sucked into the disposable chip 44 through the lower end opening of the disposable chip 44 by driving a syringe (not shown). Alternatively, in the case of manual operation, lower end portion of a pipette (not shown) is likewise inserted deeply into the internal tube 16 through the top opening of the vessel body 10, and after inserting the lower end of the pipette into the lower layer liquid 40, the lower layer liquid 40 is sucked into the pipette.

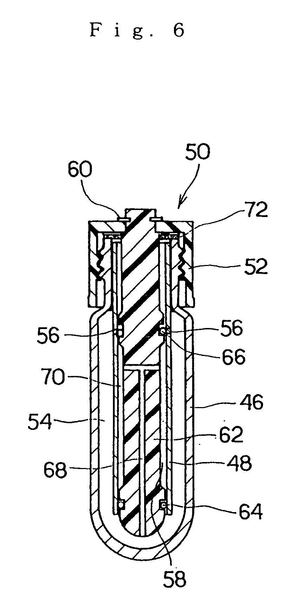

Now another preferred embodiment of the first invention is hereinafter described with reference to Fig. 6 that is a longitudinal sectional view of a centrifugal precipitation tube showing a state that a cap section is mounted on a vessel body.

In the internal part of a vessel body 46, an internal tube 48 is inserted from the proximity of upper end opening to the proximity of inner bottom face of the vessel body 46. Then, an outer peripheral surface of upper end portion of the internal tube 48 is welded on the inner peripheral surface of a mouth portion of the vessel body 46 on which a seal cap 52 of a cap section 50 is mounted, and the internal tube 48 is integrally secured to the vessel body 46. Accordingly, upper portion of a centrifugal separation chamber 54 formed between the inner peripheral surface of the vessel body 46 and outer peripheral surface of the internal tube 48 is spatially closed. On the other hand, in the internal tube 48, plural communication apertures 56 are opened at positions corresponding to the upper portion of the centrifugal separation chamber 54, whereby the upper portion of the centrifugal chamber 54 and an extraction chamber 58 inside of the internal tube 48 are communicated to each other through those communication apertures 56.

A rod-shaped piston plug 62 integrally connected to the seal cap 52 of the cap section 50 by means of a clamp 60 is inserted and fitted over the entire length of the internal tube 48. The piston plug 62 is formed so as to have a length within which lower end portion of the piston plug 62 is inserted in the proximity of inner bottom face of the vessel body 46 and slightly protruded from lower end of the internal tube 48 when inserting the piston plug 62 into the innermost area of the internal tube 48. Further on external peripheral surface of the piston plug 62, O rings 64, 66 are respectively inserted and secured in the proximity of lower end of the piston plug 62 and at a position of closing the communication aperture 56 of the internal tube 48 in a liquid-tight manner when the piston plug 62 being inserted into the innermost area of the internal tube 48. Therefore, in the same manner as the centrifugal precipitation tube shown in Figs. 1 through 3, in the state of the piston plug 62 being inserted into the innermost area of the internal tube 48, the spatial communication between the lower and upper portions of the centrifugal separation chamber 54 and the extraction chamber 58 inside of the internal tube 48 is completely interrupted respectively.

Formed in the internal part of the piston plug 62 are slots 68 which are opened at the lower end face as well as at plural points on the external surface of the piston plug 62. Then, the external peripheral surface of the piston plug 62 between both of positions at which upper and lower O rings 64, 66 are inserted and secured, is reduced in diameter to form a concave surface part 70, and the slot 68 are formed so as to communicate to the concave surface part 70. It is also preferable that a plurality of longitudinal grooves communicating to the slot 68 is provided on the external peripheral surface of the piston plug 62 instead of forming a part of the external peripheral surface of the piston plug 62 to reduce the diameter thereby forming the concave surface part 70. Reference numeral 72 shows a packing.

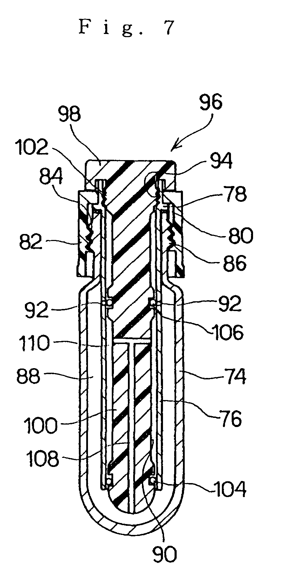

Fig. 7 shows a further embodiment of the first invention, and is a longitudinal sectional view of a centrifugal separation tube showing the state that a cap section is mounted on a vessel body.

This centrifugal precipitation tube is constructed so that an internal tube 76 may be removably inserted in and fixed to the internal part of the vessel body 74. That is, the internal tube 76 is formed to have an outer diameter capable of being in close contact with the mouth portion of the vessel body 74. The internal tube 76 is provided with an annular protrusion 78 in the proximity of the upper end thereof. The internal tube 76 is inserted into the vessel body 74, the annular protrusion 78 is brought into close contact with the upper end face of the vessel body 74 by interposition of a packing 80, and subsequently a cylindrical fixing member 82, on the inner surface of which a thread part 84 is formed and which fits onto the upper end portion of the internal tube 76, is mounted onto the upper end portion of the vessel body 74 and screwed in a thread part 86 of the vessel body 74, thereby the internal tube 74 being secured to the vessel body 74. In order to separate the internal tube 76 from the vessel body 74, the fixing member 82 is removed from the upper end portion of the vessel body 74 and then the internal tube 76 is pulled out from the internal part of the vessel body 74.

In the same manner as the centrifugal precipitation tube shown in Fig. 6, opened in the internal tube 76 are plural communication apertures 92 for communicating the upper portion of a centrifugal separation chamber 88 formed between the inner peripheral surface of the vessel body 74 and outer peripheral surface of the internal tube 76 to an extraction chamber 90 inside of the internal tube 76. Furthermore, athread part 94 is formed on the inner peripheral surface of the upper end portion of the internal tube 76.

In the centrifugal precipitation tube shown in Fig. 7, a seal cap 98 and a rod-shaped piston plug 100 forming a cap section 96 are integrally molded of a fluorine resin or the like. On the external peripheral surface of the upper end portion of the piston plug 100 connecting to the seal cap 98, a thread part 102 threading to the thread part 94 on inner peripheral surface of the upper end portion of the internal tube 76 is formed. Then the piston plug 100 is fitted and inserted into the internal tube 76 and the upper end portion of the piston plug 100 is screw threaded into the upper end portion of the internal tube 76, whereby opening surface of the upper end of the internal tube 76 can be closed in a liquid-tight manner by means of the seal cap 98. Further, in the same manner as the centrifugal precipitation tube shown in Fig.6, on the external peripheral surface of the piston plug 100, two O rings 104, 106 are inserted and secured. When inserting the piston plug 100 into the innermost area of the internal tube 76, spatial communication between the lower and upper portions of the centrifugal separation chamber 88 and the extraction chamber 90 inside of the internal tube 76 becomes completely interrupted by means of each of O rings 104, 106. Further in the internal part of the piston plug 100, a slot 108 opened at lower end face and at a plurality of points on the external peripheral surface of the piston plug 100 are formed. On the external peripheral surface of the piston plug 100 between both of positions at which the upper and lower O rings 104, 106 are inserted and secured, a concave surface part 110 is formed.

Extraction operation of the lower layer liquid using the centrifugal precipitation tube shown respectively in Figs. 6 and 7 is conducted in the same manner as the case using a centrifugal precipitation tube shown in Figs. 1 through 3. However, when extracting a lower layer liquid from a centrifugal precipitation tube after completion of the centrifugal separation operation, in the centrifugal precipitation tube shown in Figs. 6 and 7, during the step of pulling out the piston plug 62 or 100, the O ring 66 or 106 inserted and secured on the external surface of the piston plug 62 or 100 are upwardly displaced from the position of the communication aperture 56 or 92 in the internal tube 48 or 76. Further, the upper end portion of the concave surface part 70 or 110 formed on the external peripheral surface of the piston plug 62 or 100 passes over the communication aperture 56 or 92 in the internal tube 48 or 76, whereby upper portion of the centrifugal separation chamber 54 or 88 and space on the side of lower end face of the piston plug 62 or 100 in the extraction chamber 58, 90 are communicated to each other through the communication aperture 68 or 108 of the internal tube 48 or 76, through the clearance between the concave surface part 70 or 110 on the external surface of piston plug 62 or 100 and inner peripheral surface of internal tube 48 or 76 and through the slot 68 or 108 of the piston plug 62 or 100. Accordingly, the same air pressure is applied onto the liquid surface of lower layer liquid in the extraction chamber 58 or 90 and the liquid surface of upper layer liquid in the centrifugal separation chamber 54 or 88 respectively.

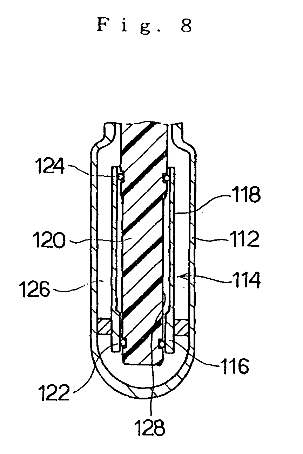

In each of the foregoing embodiments, in order that the upper portion of the centrifugal separation chamber 20, 54 or 88 and the space on the lower end face side of the piston plug 26, 62 or 100 may be communicated to each other during the process of pulling out the piston plug 26, 62 or 100 from the state of being inserted into the innermost area of the internal tube 16, 48 or 76, the slot 36, 68 or 108 is formed in the internal part of the piston plug 26, 62 or 100. However, communication means to perform such a function is not limited to the slot 36, 68 or 108 formed in the internal part of the piston plug 26, 62 or 100. An example of communication means is constructed as described hereinafter with reference to Fig. 8. Inner diameter of an internal tube 114 inserted and fixed in the internal part of a vessel body 112 is formed so that upper side portion thereof is larger than the lower end portion. Further, when inserting a piston plug 120 into the innermost area of the internal tube 114, an O ring 122 inserted and secured in the proximity of the lower end portion of the external peripheral surface of the piston plug 120 is brought into close contact with the inner peripheral surface of a thickened part (smaller inner-diameter portion) of the internal tube 114, and another O ring 124 inserted and secured to the upper portion of external peripheral surface of the piston plug 120 is brought into close contact with the inner peripheral surface of a thinned part (larger inner-diameter portion) 118. By employing such construction, in the a state of inserting the piston plug 120 into the innermost area of the internal tube 114, spatial communication between the lower and upper portions of a centrifugal separation chamber 126 located between the inner peripheral surface of the vessel body 112 and outer peripheral surface of the internal tube 114 and an extraction chamber 128 inside of the internal tube 114 is completely interrupted by each of the O rings 122, 124. On the other hand, during the process of pulling out the piston plug 120 from the state of being inserted into the innermost area of the internal tube 114, on and after the O ring 122 inserted and secured in the proximity of the lower end of external peripheral surface of the piston plug 120 gets out from the thickened part 116 of the internal tube 114, upper space of the centrifugal separation chamber 126 and space on the lower end face side of the piston plug 120 in the extraction chamber 128 are communicated to each other through a clearance between the inner peripheral surface of the thinned part of the internal tube 114 and external peripheral surface of the piston plug 120.

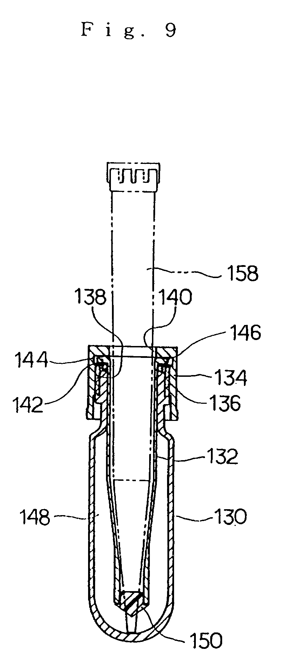

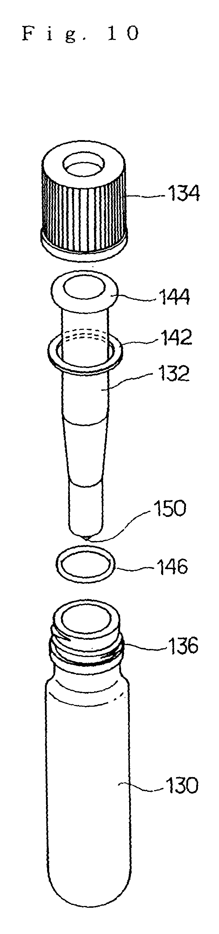

Figs. 9 and 10 show an embodiment according to the second invention. Fig. 9 is a longitudinal sectional view of a centrifugal precipitation tube, and Fig. 10 is a perspective view showing the centrifugal precipitation tube in the state of being exploded into several components.

This centrifugal precipitation tube consists of a tubular-shaped vessel body 130 top of which is opened and with a bottom, an internal tube 132 to be inserted in the internal part of the vessel body 130, and a cap 134 to be mounted on an upper end portion of the vessel body 130 and the like. A thread part 136 is formed on the outer peripheral surface of the upper end portion of the vessel body 130, and a thread part 138 for screw threading with the thread part 136 of the vessel body 130 is formed on inner peripheral surface of the cap 134. Further, a through hole 140 is formed at the central portion of the upper surface of the cap 134. The cap 134 and the internal tube 132 are integrally connected together by means of a connection ring 142 interposed on the inner side of the cap 134.

The internal tube 132 has an outer diameter smaller than inner diameter of the vessel body 130 and is formed into a tubular shape with its lower part tapered gradually. A flange part 144 is formed at the upper end portion of the internal tube 132. This flange part 144 comes engaged and in close contacts with the upper edge of the vessel body 130 properly by interposing, for example, an O ring 146 when inserting the internal tube 132 into the internal part of the vessel body 130. As far as the flange part 144 can come in close contact with the upper edge of the vessel body 130 properly, such O ring 146 is not always required to be interposed. The internal tube 132 is inserted into the internal part of the vessel body 130, whereby a centrifugal separation chamber 148 is formed between the inner peripheral surface of the vessel body 130 and the outer peripheral surface of the internal tube 132. Moreover, in the state that the internal tube 132 is inserted into the internal part of the vessel body 130, there is an extremely slight clearance capable of performing ventilation between the outer peripheral surface of the upper portion of the internal tube 132 and the inner peripheral surface of the upper portion of the vessel body 130. The internal tube 132 has a length within which lower end thereof is positioned in the proximity of inner bottom face of the vessel body 130 when inserting the internal tube 132 into the innermost area of the vessel body 130.

At the lower end portion of the internal tube 132, a closure plug 150 is upwardly inserted into the lower end opening of the internal tube 132, and the lower end opening of the internal tube 132 is closed in a liquid-tight manner. The closure plug 150 is formed so as to be easily come off by a downward pressure force, i.e., a downwardly pressing force given by the lower end of a dispensing nozzle, pipette or the like. This closure plug 150 is configured in such a manner as to have a conical or pyramidal lower surface side.

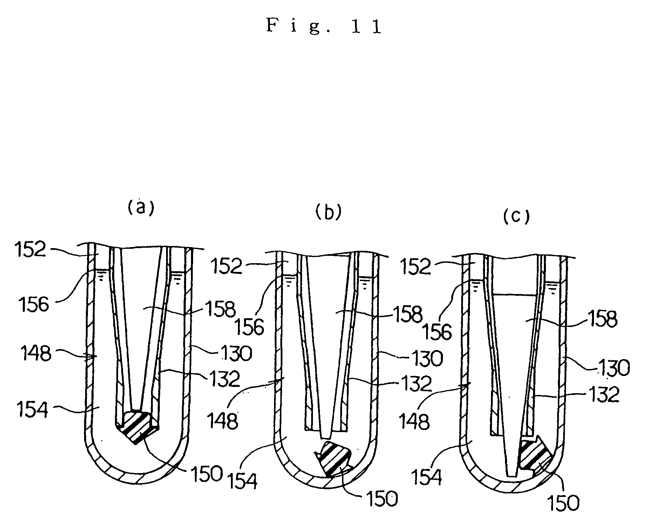

Now operation for extracting only a lower layer liquid by centrifugal separation of liquid using the centrifugal precipitation tube of above construction is hereinafter described referring to Fig. 11.

First in the state that the cap 134 is removed from the vessel body 130 and the internal tube 132 is pulled out, a liquid mixture to be separated by means of centrifugal force is injected into the vessel body 130. Taking as an example the case that a medicament contained in a serum is extracted using chloroform, for example, a serum of 0.5cc, a buffer solution of 0.5cc and chloroform of 3.5cc are injected into the vessel body 130 in order. Next, the internal tube 132 is deeply put in the internal part of the vessel body 130 and inserted into liquid, and then the cap 134 is mounted on the upper end portion of the vessel body 130 and screw threaded as far as it goes. Accordingly, the flange part 144 of the internal tube 132 is pressed onto the top edge of the vessel body 130 with interposition of the O ring 146 by means of the peripheral edge portion of a through hole 140 opened on the upper surface of the cap 134. Then, the flange part 144 of the internal tube 132 and the top edge of the vessel body 130 are brought into close contact with each other. Thus, a centrifugal separation chamber 148 between the inner peripheral surface of the vessel body 130 and outer peripheral surface of the internal tube 132 is sealed in an air-tight manner as well as in a liquid-tight manner. A centrifugal precipitation tube in this state is subjected to a shaking device, a medicament contained in a serum is transferred into chloroform, and then the centrifugal precipitation tube is set in and subjected to a centrifugal separator. Consequently, as shown in Fig. 11 (a), a liquid accommodated in the centrifugal separation chamber 148 is separated into an upper layer liquid (water layer) 152 and a lower layer liquid (chloroform) 154 due to difference in specific gravity. At this time, as shown in Fig.11 (a), the lower end of the internal tube 132 is positioned in the proximity of inner bottom face of the vessel body 130. Therefore, lower end of the internal tube 132 is positioned below a boundary 156 between the upper layer liquid 152 and the lower layer liquid 154. Thus, a portion proximate to the lower end of the internal tube 132 is in the state of being inserted into the lower layer liquid 154.

After completing the operation of centrifugal separation, the centrifugal precipitation tube is taken out of the centrifugal separator and only the lower layer liquid is extracted from the centrifugal precipitation tube by means of an automatic dispensing apparatus (not shown) . In order to conduct this, first the cap 134 mounted on the upper end portion of the vessel body 130 is twisted and released. Accordingly, the state of the flange part 144 of the internal tube 132 being in close contact with the top edge of the vessel body 130 is released. Thus, the centrifugal separation chamber 148 are communicated to the outside air through a clearance between the inner peripheral surface of the upper portion of the vessel body 130 and the outer peripheral surface of the upper portion of the internal tube 132 and through a clearance between the flange part 144 of the internal tube 132 and the top edge of the vessel body 130. Then, the centrifugal precipitation tube in this state is fixed to a mounting portion of the automatic dispensing apparatus. Subsequently, a dispensing nozzle is lowered by means of a nozzle drive mechanism. Then, as shown in Fig. 9, a disposable chip (hereinafter referred to as "dispochip") 158 forming a lower end portion of the dispensing nozzle is deeply inserted into the internal part of the internal tube 132 through the through hole 140 in the cap 134 of the centrifugal precipitation tube. Next, as shown in Fig. 11 (a), the closure plug 150 at the lower end of the internal tube 132 is downwardly pressed by means of the lower end of the dispochip 158. Accordingly, as shown in Fig. 11 (b), the closure plug 150 is disengaged from the lower end opening of the internal tube 132, and the lower end of the dispochip is inserted into the lower layer liquid 154. At this time, since the centrifugal separation chamber 148 is communicated to the outside air as described above, it does not occur that the liquid flushes into the internal tube 132 due to gas pressure of the vapor phase portion, even though the closure plug 150 is disengaged from the lower end opening of the internal tube 132.

The closure plug 150 having been disengaged from the lower end opening of the internal tube 132 sinks vertically right under the lower end opening of the internal tube 132. The closure plug 150 having reached to the inner bottom face of the vessel body 130 falls down in any one of forward, backward, leftward or rightward directions because the lower surface side of the closure plug 150 is formed conical. Therefore, as shown in Fig. 11 (c), even though the lower end of the dispochip 158 is inserted in the proximity of the inner bottom face of the vessel body 130, the closure plug 150 is pressed away by the lower end of the dispochip 158 or a part of the lower end face of the dispochip 158 comes in contact with the closure plug 150. As a result, it does not occur that the lower end face of the dispochip 158 comes in contact with the closure plug 150 and the entire of the lower end opening of the dispochip 158 is closed by the closure plug 150.

Since the lower end of the dispochip 158 is inserted into the lower layer liquid 154, the lower layer liquid 154 is sucked into the dispochip 158 through the lower end opening of the dispochip 158 by driving a syringe connected to the dispensing nozzle. At this time, as described above, since the lower end opening of the dispochip 158 is not closed by the closure plug 150, the lower layer liquid 154 is sucked without fail into the dispochip 158. In addition, at this time, since the lower end of the dispochip 158 is positioned further below the boundary between the upper layer liquid 152 and the lower layer liquid 154, there is no such worry that a part of the upper layer liquid 152 is mixed into the lower layer liquid 154 and a contamination takes place.

Further, in the foregoing embodiments, the internal tube 132 and the cap 134 are separated. It is, however, also preferable that the internal tube and the cap is integrally formed or molded as shown in Fig. 12. Further, in the above description referring to Fig. 11, only the lower layer liquid is extracted from the centrifugal precipitation tube by means of the automatic dispensing apparatus. It is, however, also possible that only the lower layer liquid is extracted from the centrifugal precipitation tube by manual operation using a hole pipette or the like, as a matter of course.

Furthermore, in the foregoing embodiments, the lower surface side of the closure plug 150 is formed into a conical or pyramidal shape. However, it is also preferable that the lower surface side of a closure plug may be formed into any other shape, as far as the closure plug comes off from the lower end portion of the internal tube and falls down in any one of forward, rearward, leftward and rightward directions from the coming off position upon reaching the inner bottom face of the vessel body. In this sense, it is preferable that a rod-shaped protrusion is provided at the central portion of the lower surface of a closure plug.

### Industrial Applicability

The centrifugal precipitation tube according to the present invention is used, for example, in the case that any medicament contained in a serum is extracted in the form of solvent extraction by an automatic extraction apparatus, or in the case that a medicament contained in a serum is extracted in the form of solvent extraction and concentration of the medicament is automatically measured by an automatic concentration measurement apparatus, when a liquid mixture of serum to which a solvent such as chloroform, after being shaken, is separated into a water phase and a solvent phase utilizing a difference in specific gravity by a centrifugal separator. When using this centrifugal precipitation tube, it becomes possible that only a lower layer liquid is exactly extracted without contamination involving an upper layer liquid.

## Claims

1. A centrifugal precipitation tube comprising:
a tubular vessel body of which top end is opened while bottom end thereof being closed; and
seal means for closing releasably the open top end of the vessel body in a liquid-tight manner;
the centrifugal precipitation tube being **characterized in that**:
an internal tube, diameter of which is smaller than that of the mentioned vessel body, is inserted in an internal part of the vessel body and secured thereto, whereby a centrifugal separation chamber is formed between inner peripheral surface of the vessel body and outer peripheral surface of the internal tube, and an upper portion and a lower portion of the centrifugal separation chamber are respectively communicated to an extraction chamber inside of the mentioned internal tube;
a piston plug, lower end portion of which is inserted in the proximity of an inner bottom face of the mentioned vessel body, is slidably and removably inserted into the mentioned internal tube in axial direction thereof; communications between the upper and lower portions of the mentioned centrifugal separation chamber and the mentioned extraction chamber are respectively interrupted when inserting the mentioned piston plug into the innermost area of the mentioned internal tube; and
an upper space of the mentioned centrifugal separation chamber and a space on the lower end face side of the piston plug in the mentioned extraction chamber are communicated to each other during the process of pulling out the mentioned piston plug from the state of being inserted in the innermost area of the mentioned internal tube.

2. The centrifugal precipitation tube according to claim 1, wherein said seal means and said piston plug are communicated to each other.

3. The centrifugal precipitation tube according to claim 1 or 2, wherein a seal member, coming in close contact with the inner peripheral surface of the internal tube in a liquid-tight manner when said piston plug is inserted and fitted into said internal tube, is mounted on and secured to the external peripheral surface of said piston plug.

4. The centrifugal precipitation tube according to claim 1 or 2, wherein upper end face of said internal tube is opened in the internal part of said vessel body so that upper portion of said centrifugal separation chamber and the extraction chamber inside of the internal tube are communicated to each other; and
a slot is formed in the internal part of said piston plug in such a manner as to be opened at a lower end face and at an external peripheral surface of said piston plug.

5. The centrifugal precipitation tube according to claim 1 or 2, wherein said internal tube is provided with a communication aperture so that upper portion of said centrifugal separation chamber and the extraction chamber inside of the internal tube are communicated to each other through said communication aperture; and
a slot opened at the lower end face and external peripheral surface of the piston plug is formed in the internal part of the piston plug, and a groove or a concave-surface part communicating to said slot is formed on the external peripheral surface of said piston plug.

6. The centrifugal precipitation tube according to claim 1 or 2, wherein the internal tube is formed so that inner diameter of upper side portion thereof is larger than that of the lower end portion.

7. A centrifugal precipitation tube comprising:
a tubular vessel body of which top end is opened while bottom end thereof being closed;
an internal tube being tubular shaped and having an outer diameter smaller than inner diameter of the mentioned vessel body, and which is inserted into the internal part of the vessel body and held so that lower end of the internal tube is positioned in the proximity of the inner bottom face of the vessel body;
a closure plug which is detachably fitted to lower end portion of the mentioned internal tube, closes lower end opening of the internal tube in a liquid-tight manner, and easily comes off from the lower end portion of the internal tube by downward pressure force; and
seal means for sealing a centrifugal separation chamber formed between inner peripheral surface of the mentioned vessel body and outer peripheral surface of the mentioned internal tube;
the centrifugal precipitation tube being **characterized in that**: the lower surface side of the mentioned closure plug is formed into such a configuration that the closure plug comes off from the lower end portion of the mentioned internal tube and falls down in any one of forward, reward, leftward and rightward directions from the coming off position upon reaching the inner bottom face of the mentioned vessel body.

8. The centrifugal precipitation tube according to claim 7, wherein lower surface side of said closure plug is formed into a conical or pyramidal shape.

9. The centrifugal precipitation tube according to claim 7 or 8, wherein a flange that comes in close contact with the upper edge portion of said vessel body either by interposition of a liquid-tight seal member or by direct engagement is formed on an upper end portion of said internal tube;
a thread part is formed on an outer peripheral surface of the upper end portion of the mentioned vessel body; and seal means is formed by a cap having a thread part to be mounted on the upper end portion of the mentioned vessel body and screw threaded into the mentioned thread part, and which is provided with a through hole at the central portion of an upper surface; and
wherein, by screw threading the cap into the upper end portion of the vessel body, a centrifugal separation chamber formed between inner peripheral surface of the vessel body and outer peripheral surface of the mentioned internal tube is sealed in an air-tight manner, while, by loosing the cap, the centrifugal separation chamber is communicated to outside air.
